# EUROPÄISCHE PATENTSCHRIFT

(11) **EP 1 532 401 B1**
(45) Veröffentlichungstag und Bekanntmachung des Hinweises auf die Patenterteilung: **02.05.2018**
(21) Anmeldenummer: 03792379.4
(22) Anmeldetag: 19.08.2003
(51) Int. Cl.: F24C 15/04, C03C 17/00, C03C 17/28, C03C 17/34, C01B 33/14

(54) **GARRAUMTÜR EINES GAROFENS MIT PYROLYSEFUNKTION**
COOKING COMPARTMENT DOOR OF A COOKING OVEN HAVING A PYROLYSIS FUNCTION
PORTE DE CHAMBRE DE CUISSON D'UN FOUR DE CUISSON A FONCTION PYROLYSE

(30) Priorität: 21.08.2002 DE 10239180
(43) Veröffentlichungstag der Anmeldung: 25.05.2005
(73) Patentinhaber: BSH Hausgeräte GmbH, 81739 München (DE)
(72) Erfinder: ROCH, Klemens, 83308 Trostberg (DE); WAGNER, Michael, 83355 Grabenstätt (DE); JÖRDENS, Frank, 83278 Traunstein (DE); WALTER, Bernhard, 83355 Grabenstätt (DE)
(86) Internationale Anmeldenummer: PCT/EP2003/009189
(87) Internationale Veröffentlichungsnummer: WO 2004/018944

(56) Entgegenhaltungen:
- EP-A- 0 355 406
- DE-A- 19 814 211
- DE-C- 10 007 923
- US-A- 4 898 147

## Beschreibung

Die Erfindung betrifft eine Garraumtür eines Garofens, beispielsweise eines pyrolytisch zu reinigenden Elektroherdes, nach dem Oberbegriff des Anspruchs 1.

Bei Haushaltsgaröfen mit dem Leistungsmerkmal "pyrolytisch Selbstreinigung" werden an der Muffelwandung eingebrannte Garrückstände bei Innenraumtemperaturen von typischerweise in der Größenordnung 500°C pyrolisiert. Sie sind dann als auf dem Boden der Muffel liegende Asche leicht zu entfernen. Die gegenüber normalen Betriebstemperaturen eines Haushaltsgarofens wesentlich höheren pyrolytischen Temperaturen erfordern den Einsatz hochwertiger Gläser zur Verglasung der Garraumtür. Es hat sich hierfür der Einsatz von Borosilikatgläsern durchgesetzt.

Bekannt ist auch, die Garraumtür eines Haushaltsgarofens mehrwandig zu verglasen und hierbei die dem Türinnenraum zugewandte Oberfläche des inneren Türglases durch einen Einbrennvorgang bei etwa 600-800 °C mit einem Emailfarben-Aufdruck bzw. glasflussbasiertem Aufdruck zu versehen. Hierdurch lassen sich beispielsweise Gebrauchshinweise für den Benutzer, die diesem bei Bedienung des Garofens gewissermaßen ständig vor Augen geführt werden, und auch gestalterische Akzente realisieren.

Es hat sich herausgestellt, dass die Schlagfestigkeit von auf diese Weise bedruckten Glasscheiben, wohl infolge eines lonenaustausches zwischen dem Glasfluss bzw. Email und der z u bedruckenden Borosilikatscheibe, speziell gegenüber Stoßeinwirkungen auf die der Bedruckung abgewandten Seite der Glasscheibe erheblich reduziert ist.

Es ist daher aus der DE 100 07 923 C1 bekannt, einen entsprechenden Aufdruck auf der dem G arofen (der Backmuffel) zugewandten Türoberfläche aufzubringen, denn dies ist die im Gebrauch des Garofens Stoßeinwirkungen ausgesetzte Oberfläche. Die bekannten Glasflüsse für Borosilikatglas sind jedoch stark bleihaltig, und das Blei löst sich bei starker Erhitzung (im Bereich der Pyrolysetemperaturen) nach und nach aus der Oberfläche der Farbschicht und gelangt in den Backraum. Hierdurch können im Extremfall gesundheitliche Beeinträchtigungen beim Benutzer verursacht werden. Überdies hat eine Farbschicht der bekannten Art eine rauhe Oberfläche mit nur bedingt zufriedenstellender ästhetischer Anmutung.
Aus der US 4,898,147 A sind Borosilikat-Scheiben bekannt, die mit Infrarotstrahlung hemmenden Beschichtungen versehen sind. Aus der DE 198 14 211 A1 ist ein Verfahren bekannt, bei dem auf der Frontglasscheibe einer Herdtür oder Bedienblende aus Glas ein flüssiges Bedruckungsgemisch aus einem gelösten Farbstoff und einem Härter mit einem Druckverfahren aufgetragen wird, welches anschließend getrocknet und gehärtet wird. Eine Anwendung des Verfahrens auf dem inneren Türglas ist hierbei nicht offenbart.
Der Erfindung liegt daher die Aufgabe der Bereitstellung einer verbesserten Garraumtür für einen Garofen mit Pyrolysefunktion zu Grunde, die einerseits hinreichend stoßfest ist und andererseits etwaige gesundheitliche Gefährdungen für den Benutzer völlig ausschließt und zudem möglichst eine befriedigende ästhetische Anmutung hat.
Diese Aufgabe wird durch eine Garraumtür mit den Merkmalen des Anspruchs 1 gelöst. Zur Erfindung gehört zum einen der Gedanke, anstelle der bekannten Email- oder Glasfluss-Farbschichten zum Bedrucken der Borosilikat-Scheibe eine nichtdurch Schmelzen mit deren Oberfläche verbundene Farbschicht vorzusehen. D.h. dassdie Farbschicht bei einer Temperatur mit der Borosilikat-Scheibe verbunden wird, die eine Adhäsion der Farbschicht an der Borosilikat-Scheibe ermöglicht. Eine derartige Adhäsionstemperatur liegt im Bereich einer Kondensations- bzw. Vernetzungstemperatur der Farbschicht bei 150 - 200 °C. Die Adhäsionstemperatur ist somit deutlich geringer als eine Transformationstemperatur bzw. eine Anschmelztemperatur der Borosilikat-Scheibe. Aufgrund der vergleichsweise niedrigen Temperatur beim Verbinden der Farbschicht mit der Borosilikat-Scheibe ist ein nachteilhafter Einflußauf die Oberflächenstruktur der thermisch vorgespannten Borosilikat-Scheibe verhindert. Somit wird die Stoßfestigkeit der Borosilikat-Scheibe durch das Aufbringen der Farbschicht nicht beeinträchtigt. Die Erfindung schließt weiter den Gedanken ein, hierfür eine Farbschicht bereitzustellen, die bis mindestens 400°C (im jahrelangen Normalbetrieb eines Garofens) temperaturbeständig ist. Schließlich gehört zur Erfindung der Gedanke, diese Farbschicht - in Abkehr von den jüngeren entsprechenden Entwicklungen bei Email- bzw. Glassfluss-Druckschichten - auf der dem Garraum bzw. der Backmuffel abgewandten Oberfläche der Tür vorzusehen. Ein Ausdampfen von Schadstoffen aus der Farbschicht in den Garraum ist damit verhindert.
Mit der Erfindung wird eine Garraumtür bereitgestellt, die eine glatte Oberfläche mit hochwertiger ästhetischer Anmutung hat, ausgesprochen stoß- bzw. schlagfest ist und aus der keine gesundheitlichen Stoffe austreten können.

Die Farbschicht ist im Wesentlichen mit einem anorganischen Bindemittel ausgewählt aus Wasserglas und/oder Sol-Gel-Binder gebunden.
Als an sich für entsprechende Glasfarben bekannte Pigmente bzw. Farbstoffe kommen anorganische Metallverbindungen zum Einsatz.
Die Bedruckung der Garraumtür mit der erwähnten Farbschicht wird - in an sich ebenfalls bekannter Weise - bevorzugt mittels eines Siebdruckverfahrens entsprechend den ergonomischen bzw. gestalterischen Vorgaben ausgeführt, wobei beispielsweise ein 77T oder 100T Siebdruckgewebe eingesetzt werden kann. Bevorzugt wird die mit der Bedruckung versehene Glasoberfläche vor dem Druck mit einem geeigneten organischen Lösungsmittel (insbesondere einem niederen Alkohol oder Aceton) gereinigt und gegebenenfalls der Farbmischung ein die Haftung auf der Glasoberfläche verbesserndes Mittel zugegeben.
Für ästhetisch besonders anspruchsvolle Realisierungen kann auf die Farbschicht zusätzlich ein (insbesondere hochglänzender) Klarlack oder Sperrlack zur Vermeidung von Beschädigungen auf Basis eines organischen oder anorganischen Binders aufgebracht werden.
Für spezielle Anwendungsfälle ist zudem eine Kombination der vorgeschlagenen, nicht durch Schmelzen mit der Glasoberfläche verbundenen Bedruckung mit einer weiteren, in bekannter Weise angeschmolzenen Beschichtung auf der gegenüberliegenden oder auch derselben Glasoberfläche möglich.

Bei der Erfindung für eine dekorative, wärmebeständige Beschichtung einer Garraumtür werden als Pigmente anorganische Metallverbindungen, etwa ein Titandioxid vom Rutiltyp eingesetzt.

Die Ausführung der Erfindung ist nicht auf diese Beispiele beschränkt, sondern ebenso mit einer Vielzahl anderer siebdruckfähiger Lacksysteme möglich, deren hohe Temperaturbeständigkeit dem Fachmann bekannt ist und deren Anwendung daher im Rahmen fachmännischen Handelns liegt.

## Patentansprüche

1. Garraumtür eines Garofens mit Pyrolysefunktion, mit einer Borosilikat-Glasscheibe als Innenscheibe, welche auf einer Oberfläche zumindest abschnittsweise mit wenigstens einer Farbschicht ausgestattet ist, **dadurch gekennzeichnet, dass** die Farbschicht auf der vom Garraum abgewandten Oberfläche der Borosilikat-Glasscheibe aufgebracht ist; dass eine Adhäsionstemperatur, die eine Adhäsion der Farbschicht an der Borosilikat-Glasscheibe ermöglicht, bei 150 bis 200°C liegt; und dass die Farbschicht bis mindestens zu einer Temperatur von 400°C beständig ist und nicht durch Schmelzen mit der Oberfläche verbunden ist,
wobei die Farbschicht im Wesentlichen mit einem anorganischen Bindemittel ausgewählt aus einem Wasserglas-Binder und/oder einem Sol-Gel-Binder gebunden ist, und wobei die Farbschicht ein Pigment ausgewählt aus anorganischen Metallverbindungen umfasst.

2. Garraumtür nach einem der vorangehenden Ansprüche, **dadurch gekennzeichnet, dass** die Farbschicht per Siebdruck strukturiert auf die Oberfläche aufgebracht ist.

3. Garraumtür nach einem der vorangehenden Ansprüche, **dadurch gekennzeichnet, dass** der wenigstens einen Farbschicht zumindest eine weitere Schicht zugeordnet ist.

4. Garraumtür nach Anspruch 3, **dadurch gekennzeichnet, dass** die weitere Schicht als Haftvermittlungsschicht für die Farbschicht ausgebildet ist und zwischen dieser und der Borosilikat-Glasscheibe vorgesehen ist.

5. Garraumtür nach Anspruch 3, **dadurch gekennzeichnet, dass** die weitere Schicht als eine die Farbschicht schützende Sperrschicht ausgebildet ist, die der Farbschicht zur Borosilikat-Glasscheibe hin vorgelagert ist.

6. Garraumtür nach Anspruch 3, **dadurch gekennzeichnet, dass** die weitere Schicht als eine, eine auftretende Infrarotstrahlung zumindest weitestgehend hemmende Schicht ausgeführt ist.

7. Garraumtür nach einem der Ansprüche 4 bis 6, **dadurch gekennzeichnet, dass** wenigstens drei weitere Schichten vorgesehen sind, von denen eine als Haftvermittlungsschicht, eine als die Infrarotstrahlung hemmende Schicht und eine als Sperrschicht ausgebildet ist.

8. Garraumtür nach Anspruch 7, **dadurch gekennzeichnet, dass** der Sperrschicht zur Borosilikat-Glasscheibe hin die die Infrarotstrahlung hemmende Schicht vorgelagert ist.

9. Garraumtür nach einem der Ansprüche 1 bis 8, **dadurch gekennzeichnet, dass** die Farbschicht zumindest teilweise in Rasterform und/oder Schriftform ausgeführt ist.

## Claims

1. Cooking compartment door of a cooking oven having a pyrolysis function, having a borosilicate glass panel as an inner panel, which on a surface is equipped at least in sections with at least one colour coat, **characterised in that** the colour coat is applied to the surface of the borosilicate glass panel which faces away from the cooking compartment; that an adhesion temperature, which permits an adhesion of the colour coat to the borosilicate glass panel, is at 150 to 200°C; and that the colour coat is resistant at least up to a temperature of 400°C and is not connected to the surface by means of melting,
wherein the colour coat is bonded substantially to an inorganic bonding agent chosen from a soluble glass binder and/or a sol-gel binder, and wherein the colour coat comprises a pigment chosen from inorganic metal compounds.

2. Cooking compartment door according to one of the preceding claims, **characterised in that** the colour coat is screen-printed in a structured manner onto the surface.

3. Cooking compartment door according to one of the preceding claims, **characterised in that** at least one further coat is assigned to the at least one colour coat.

4. Cooking compartment door according to claim 3, **characterised in that** the further coat is embodied as an adhesion coat for the colour coat and is provided between this and the borosilicate glass panel.

5. Cooking compartment door according to claim 3, **characterised in that** the further coat is embodied as a boundary coat which protects the colour coat and which is arranged upstream of the colour coat toward the borosilicate glass panel.

6. Cooking compartment door according to claim 3, **characterised in that** the further coat is embodied as a coat which at least largely inhibits the occurrence of infrared radiation.

7. Cooking compartment door according to one of claims 4 to 6, **characterised in that** at least three further coats are provided, of which one is embodied as an adhesion coat, one as a coat inhibiting the infrared radiation and one as a boundary coat.

8. Cooking compartment door according to claim 7, **characterised in that** the coat inhibiting the infrared radiation is arranged upstream of the boundary coat toward the borosilicate glass panel.

9. Cooking compartment door according to one of claims 1 to 8, **characterised in that** the colour coat is embodied at least partially in a grid form and/or written form.

## Revendications

1. Porte de chambre de cuisson d'un four de cuisson à fonction de pyrolyse, comprenant une vitre en verre borosilicate en tant que vitre intérieure, laquelle est équipée sur une surface, au moins par sections, d'au moins une couche colorée, **caractérisée en ce que** la couche colorée est appliquée sur la surface de la vitre en verre borosilicate, détournée de la chambre de cuisson, **en ce qu'**une température d'adhésion, laquelle permet une adhésion de la couche colorée sur la vitre en verre borosilicate, est de 150 à 200°C, et **en ce que** la couche colorée est résistante jusqu'à au moins une température de 400°C et n'est pas reliée à la surface par fusion,
la couche colorée étant liée essentiellement à l'aide d'un liant anorganique sélectionné à partir d'un liant de verre soluble et/ou d'un liant sole/gel, et la couche colorée comprenant un pigment sélectionné à partir de composés métalliques anorganiques.

2. Porte de chambre de cuisson selon l'une quelconque des revendications précédentes, **caractérisée en ce que** la couche colorée est appliquée sur la surface de manière structurée par sérigraphie.

3. Porte de chambre de cuisson selon l'une quelconque des revendications précédentes, **caractérisée en ce qu'**au moins une couche supplémentaire est associée à l'au moins une couche colorée.

4. Porte de chambre de cuisson selon la revendication 3, **caractérisée en ce que** la couche supplémentaire est réalisée comme couche adhésive pour la couche colorée et est ménagée entre celle-ci et la vitre en verre borosilicate.

5. Porte de chambre de cuisson selon la revendication 3, **caractérisée en ce que** la couche supplémentaire est réalisée en tant qu'une couche barrière protégeant la couche colorée, laquelle est placée en avant de la couche colorée en direction de la vitre en verre borosilicate.

6. Porte de chambre de cuisson selon la revendication 3, **caractérisée en ce que** la couche supplémentaire est réalisée en tant qu'une couche empêchant au moins largement un rayonnement infrarouge se manifestant.

7. Porte de chambre de cuisson selon l'une quelconque des revendications 4 à 6, **caractérisée en ce qu'**au moins trois couches supplémentaires sont ménagées, dont une est réalisée comme couche adhésive, une comme couche empêchant le rayonnement infrarouge et une comme couche barrière.

8. Porte de chambre de cuisson selon la revendication 7, **caractérisée en ce que** la couche empêchant le rayonnement infrarouge est placée en avant de la couche barrière en direction de la vitre en verre borosilicate.

9. Porte de chambre de cuisson selon l'une quelconque des revendications 1 à 8, **caractérisée en ce que** la couche colorée est réalisée au moins en partie en forme de quadrillage et/ou en forme d'écriture.
